# EUROPÄISCHE PATENTANMELDUNG

(11) **EP 0 831 167 A2**
(43) Veröffentlichungstag der Anmeldung: **25.03.1998**
(21) Anmeldenummer: 97116005.6
(22) Anmeldetag: 15.09.1997
(51) Int. Cl.: D06P 1/613, D06P 1/651, D06P 1/667, D06P 1/62

(54) **Verwendung von Aryloxypolyglykoläthern als Egalisier- und Dispergiermittel**

(30) Priorität: 20.09.1996 DE 19638566
(71) Anmelder: Clariant GmbH, 65929 Frankfurt am Main (DE)
(72) Erfinder: Martini, Thomas, Dr., 65779 Kelkheim (DE); Oppitz, Peter, 65779 Kelkheim (DE); Kühn, Reinhard, 60433 Frankfurt (DE)

(57) **Zusammenfassung**

Verbindungen der Formel 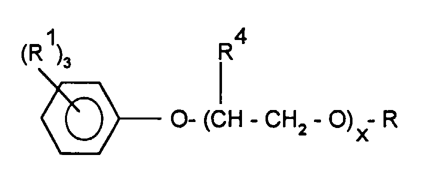 worin R Wasserstoff oder eine Gruppe der Formeln 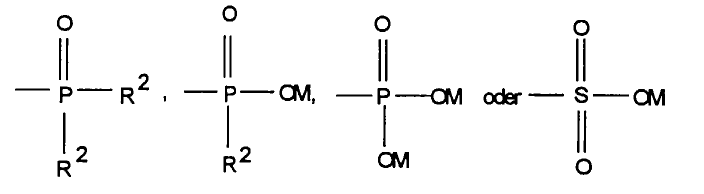 wobei Sulfosäureester nur im pH-Bereich von 7.1 bis 12 verwendet werden, bedeuten und die übrigen Symbole die in der Beschreibung genannte Bedeutung haben, werden als Cyclisier- und Dispergiermittel in Färbe- und Klotzbädern und in Dispersionsfarbstoffen eingesetzt.

## Beschreibung

Es ist bekannt, für die Zubereitung von Dispersionsfarbstoffen Ligninsulfonate zu verwenden. Diese Ligninsulfonate sind jedoch nicht bei allen Dispersionsfarbstoffen wirksam, da diese sich erheblich in ihrer chemischen Konstitution und in ihren Eigenschaften, wie Teilchengröße, der Teilchengrößenverteilung, der Hydrophilie und - wenn auch geringeren - Löslichkeit in Wasser unterscheiden. Ein weiterer Nachteil der Ligninsulfonate ist, daß sie Polyesterfasern beim Färbeprozeß stark anschmutzen. Das macht sich bei hellen Nuancen oder bei brillanten Farbtönen besonders störend bemerkbar. Außerdem haben diese Ligninsulfonate die Eigenschaften, empfindliche Azofarbstoffe beim Färbevorgang, verstärkt in alkalischen Färbebad, zu reduzieren; d.h. man erhält beim Färben in solchen Fällen stark verminderte Farbausbeuten.

Das Färben im alkalischen Bad bei pH 7,1 bis pH 12, vorzugsweise bei pH 8,5 bis 10 ist jedoch von Vorteil, weil sich dann Oligomere aus der Polyesterfaser an der Faseroberfläche in Form von Kristallen nicht oder kaum noch ablagern. Das ist ein großer Vorteil bei der Weiterverarbeitung von Polyesterfasern, weil eine heiße, alkalische Behandlung zur Beseitigung der Oligomere entfallen kann, die mit Natronlauge und Natriumdithionit bei 80 bis 100°C durchgeführt wird. Durch diese Behandlung werden die Oligomere nicht immer vollständig genug entfernt und zusätzlich kann eine unerwünschte Nuancenverschiebung der Färbung erfolgen.

Außerdem werden beim Färben im alkalischen pH-Bereich bei Temperaturen von 90 bis 140°C handelsübliche Egalisier- und Dispergiermittel häufig durch Hydrolyse gespalten und damit unwirksam. Es wurde überraschenderweise gefunden, daß die im folgenden beschriebenen Hilfsmittel als Egalisier- und Dispergiermittel im alkalischen Färbebad wirksam sind, und daß man Färbungen ohne Unterschiede hinsichtlich Farbstärke und ohne Farbtondifferenzen bei Kombinationsfärbungen mit mehreren Dispersionsfarbstoffen erhält, gleichgültig ob es sich um Färbungen auf Flächengebilden, Garnen, Fäden oder unversponnenem Material handelt.

Gegenstand der Erfindung ist die Verwendung von Arylorypolyglykoläthern der Formel 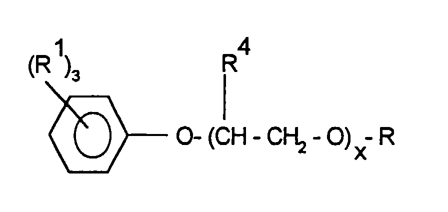 worin R Wasserstoff oder eine Gruppe der Formeln 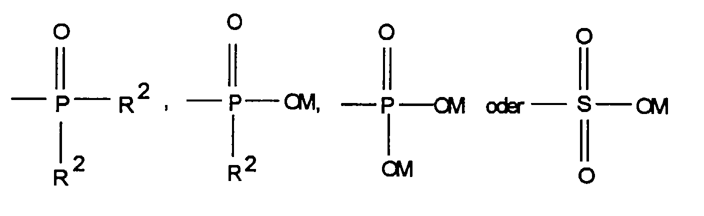 wobei Sulfosäureester nur im pH-Bereich von 7.1 bis 12 verwendet werden,
- R¹: unabhängig voneinander Wasserstoff, C₁-C₂₄-Alkyl, C₅-C₁₅-Cycloalkyl, C₆-C₂₄-Aryl, C₇-C₂₄-Alkaryl oder (CH₂)_{z}Aryl
- R²: unabhängig voneinander -OH, -O-C₁-C₂₄-Alkyl, -O-C₅-C₁₅-Cycloalkyl, -O-C₆-C₁₈-Aryl oder
eine Gruppe der Formel 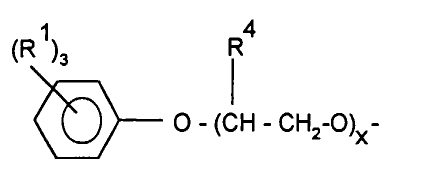
- M: ein Alkalimetall-, Erdalkalimetall- oder Ammoniumion der Formel N(R³)₄,
- R³: unabhängig voneinander Wasserstoff, C₁-C₄-Alkyl, C₅-C₁₅-Cycloalkyl, C₆-C₁₈-Aryl oder eine Gruppe der Formel -(CH₂)_{z}OH,
- R⁴: Wasserstoff oder Methyl,
- x: eine Zahl von 1 bis 100 und
- z: eine Zahl von 1 bis 10 bedeutet,
als Egalisier- und Dispergiermittel.

Die Reste R¹, R² und R³ sind gegebenenfalls substituiert. Geeignete Substituenten sind Halogen, wie Brom und Chlor, eine Hydroxygruppe, Nitrogruppe, Aminogruppe, Carboxylgruppe, Sulfonsäuregruppe oder deren Estergruppe.

Bevorzugt werden solche oben beschriebenen Verbindungen verwendet, bei denen R¹ unabhängig voneinander C₁-C₁₂-Alkyl, C₅-C₁₀-Cycloalkyl, C₆-C₁₂-Aryl, C₇-C₁₃-Alkaryl, insbesondere C₁ bis C₃ substituiertes Phenyl, R² unabhängig voneinander - O-C₁-C₁₂-Alkyl, -O-C₅-C₁₀-Cycloalkyl, -O-C₆-C₁₂-Aryl, R³ unabhängig voneinander Wasserstoff, C₁-C₂-Alkyl, C₅-C₁₀-Cycloalkyl, C₆-C₁₂-Aryl, x eine Zahl von 1 bis 50 und z eine Zahl von 1 bis 8 bedeutet,

Insbesondere bevorzugt ist die Verwendung von Verbindungen der obigen Formel, worin R¹ C₁-C₆-Alkyl, Phenyl, Naphthyl, Benzyl, Diphenyl, Styryl oder 1-Phenylethyl, R² C₁-C₆-Alkyl oder Phenyl und M ein Alkalimetallion, Mono-, Di- oder Triethylammoniumion oder Triethanolammoniumion, x eine Zahl von 3 bis 10 und z eine Zahl von 1 bis 5 bedeuten.

Die Verwendung der oben beschriebenen Verbindungen kann in reiner Form oder in Mischungen mehrerer derartiger Verbindungen erfolgen.

Die Acyloxyalkylengruppe -(CHR⁴-CH₂O)ₓ- kann eine Oxethylen- oder eine Oxpropylengruppe bedeuten sowie Mischungen von Oxethylen- und Oxpropylengruppen. Für diesen Fall kann die Polyoxalkylengruppe die Oxethylen- und Oxpropyleneinheiten in statistischer Verteilung enthalten, möglich sind auch geschlossene Blöcke von Oxethylen- und Oxpropyleneinheiten. Die Mischungen der obigen Formel enthalten im allgemeinen 0 bis 50 Oxethyleneinheiten und 0 bis 50 Oxpropyleneinheiten, wobei x in jedem Fall mindestens 1 ist. Bevorzugt sind 0 bis 25 Oxethyleneinheiten und 0 bis 25 Oxpropyleneinheiten, insbesondere 3 bis 10 Oxethyleneinheiten und 3 bis 10 Oxpropyleneinheiten.

Die Verbindungen der obigen Formel sind bekannt aus WO-94/10839 und aus den dort angegebenen weiteren Druckschriften. Dieser Stand der Technik hat die Verwendung der in Rede stehenden Arylorypolyglykoläther als Hilfsmittel bei Pflanzenschutzformulierungen zum Inhalt.

Die oben genannten Verbindungen können allein oder zusammen mit anderen Egalisier- und Dispergiermitteln oder mit anderen Tensiden, Gerüststoffen und anderen üblichen Zusatz- und Hilfsmitteln in Farbbädern, Klotzbädern und Druckpasten für den Textil- und Papierdruck eingesetzt werden. Die Wirkung der Verbindungen kann hinsichtlich der Egalisierwirkung, der Dispergierwirkung oder beider Wirkungen genutzt werden. Beide Effekte gemeinsam sind für die Echtheit und Gleichmäßigkeit der Färbung z.B. auf Polyester-, Acetat-, Triacetat- oder Polyamidfasermaterialien von Bedeutung. Ebenso können die Verbindungen bei der Herstellung von Dispersionsfarbstoffen zugemischt werden, um besonders hohen Ansprüchen an die Feinverteilung und Stabilität der Farbstoffdispersionen beim Färben im alkalischen Medium zu genügen.

Als flüssiges Medium enthalten die Farbbäder und Klotzbäder insbesondere Wasser oder gegebenenfalls auch organische Lösungsmittel, die zwischen 100°C und 290°C sieden. Vorzugsweise genannt seien aromatische Kohlenwasserstoffe, wie Xylol, Toluol, Ethylbenzol, alkylierte Benzole mit durchschnittlich 9 Kohlenstoffatomen, wie die unter der Bezeichnung ®Solvesso (Esso Chemie GmbH) bekannten Lösungsmittel-Typen und Dimethylnaphthalin, ferner halogenierte aromatische Kohlenwasserstoffe, wie Chlorbenzole, außerdem Alkohole und Ketone, wie n-Butanol, n-Hexanol, iso-Hexanol, n-Octanol, Cyclohexanol, Benzylalkohol und Di-n-butyl-keton, und ferner Ether und Ester.

Als Farbmittel enthalten die Färbe- und Klotzbäder und Pasten die hierzu üblicherweise benutzten und bekannten Verbindungen, insbesondere Dispersionsfarbstoffe oder auch optische Aufheller. Die Menge an Aryloxypolyglykoläther beträgt 0,01 bis 10 Gew.-%, bezogen auf die synthetische Faser. Man kann auch Mischungen der Aryloxypolyglykoläther nehmen, die sich in der Art des Restes R unterscheiden. Das Gewichtsverhältnis bei solchen Mischungen kann 1:19 bis 19:1, vorzugsweise 1:4 bis 4:1 der beiden Aryloxypolyglykoläther betragen.

Die Dispergier- und Egalisiermittel der vorliegenden Erfindung zeigen eine zuverlässige Dispergierwirkung auch im pH-Bereich von pH 7,1 bis 12 und werden nicht durch das Alkali und durch die Wärme (bis zu 140°C) der Behandlungs- und Färbebäder während der üblichen Färbezeit bis zu 120 min. in ihrer Wirksamkeit als Dispergier- und Egalisierhilfsmittel beeinträchtigt.

Die oben beschriebenen Aryloxypolyglykoläther sind mit Wasser verdünnbar und eignen sich dadurch auch besonders gut zur Herstellung von hochkonzentrierten fließfähigen Dispersionen organischer und anorganischer Farbmittel. Als Farbmittel eignen sich alle schwerlöslichen Farbstoffe und Pigmente wie Küpenfarbstoffe und Azofarbstoffe, besonders aber Dispersionsfarbstoffe. Diese Farbmittel werden als Preßkuchen oder in einzelnen Fällen auch in getrockneter Form mit den Aryloxypolyglykoläthern der Erfindung oder deren wäßriger Lösung mit möglichst wenig Wasser zu einer pumpfähigen Suspension in einem Dissolver (Schnellrührer mit Sägezahnscheibe) verrührt, wenn nötig zur Homogenisierung über eine Korundscheibenmühle oder ähnliche Kolloidmühlen gegeben und dann im allgemeinen in einer kontinuierlichen Rührwerksmühle mit Quarzitperlen von 1 bis 3 mm Durchmesser in eventuell mehreren Durchgängen bis zur gewünschten Feinverteilung gemahlen. Nach dem Mahlen können ebenso wie beim Anrühren weitere Zusätze von Baktericiden, Stellmitteln, wie z.B. Zucker, weiteren Dispergiermitteln und Wasser zur Teigendeinstellung gemacht werden. Zur Pulverherstellung wird ein geeigneter Teig in einem Sprühturm getrocknet und anschließend auf den gewünschten Trockengehalt gebracht.

Das Verhältnis von Dispergiermittel zu Farbmittelpulver kann in weiten Grenzen variieren und beträgt im allgemeinen 0,3 bis 10, vorzugsweise 0,5 bis 2 Gewichtsteile Dispergiermittel auf ein Teil Farbstoffpulver.

### Beispiel 1:

### Färben nach dem Ausziehverfahren

Fäden aus Polyester-Endlos-Material werden auf Färbehülsen gewickelt und in einem Färbeapparat für Kreuzspulen in einem Färbebad behandelt. Der Färbeapparat enthält auf 1 kg Färbegut 10 l Wasser. Dieses Bad enthält 3 g/l Natriumtetraborat-10-Hydrat und 1 g/l von dem Egalisier- und Dispergiermittel der Formel

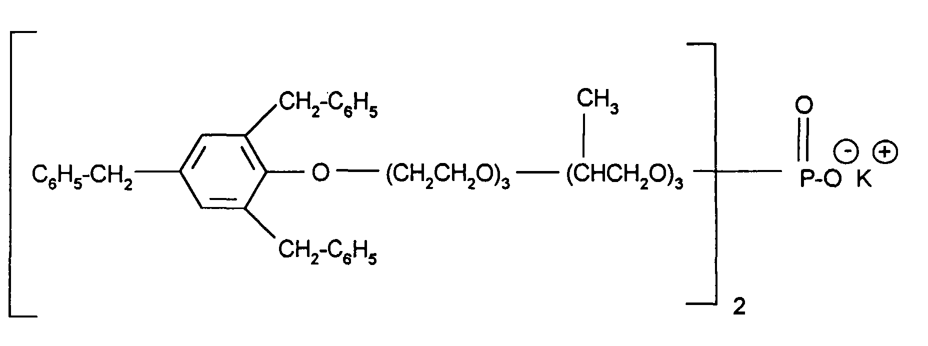

Bei 60°C wird dieses Behandlungsbad abwechselnd von innen nach außen und von außen nach innen durch die Kreuzspulen gepumpt, insgesamt 10 min. lang. Diese wechselnde Richtung der Färbeflotte wird während des ganzen Prozesses, solange der Apparat gefüllt ist, beibehalten. Durch diesen Vorlauf entsteht eine gleichmäßige Verteilung des Hilfsmittels und der Chemikalien im Bad und im Färbegut.

Nach diesem Vorlauf wird 2 % des Farbstoffes (Color Index Disperse Yellow 160) berechnet auf das Gewicht der Fäden mit der Formel 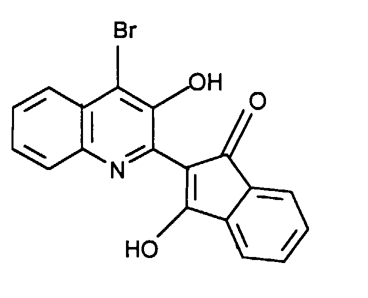 dem Behandlungsbad zugegeben. Zum gleichmäßigen Verteilen des Farbstoffes wird 10 min. mit wechselnder Flottenrichtung, wie oben beschrieben, behandelt. Danach wird das Behandlungsbad durch eine indirekte Heizung mit 0,5°C pro min. auf 130°C aufgeheizt. Während 30 min. wird bei 130°C gefärbt, gefolgt von einem Abkühlen mit 2°C pro min. auf 80°C. Das Behandlungsbad wird bei 80°C abgelassen. Die Färbung auf dem Färbegut ist gleichmäßig, sowie reibecht. Auf den Metallteilen des Färbeapparates, die mit dem Behandlungsbad in Berührung kommen, und den Hülsen treten keine Farbstoffabscheidungen auf. Ohne die dispergierende Wirkung des Hilfsmittels entsteht eine reibunechte Färbung und Ablagerungen des Farbstoffes auf den Metallteilen. Weiterhin ist die Färbung auf dem Färbegut gleichmäßig, wie durch Verstricken des Garnes auf einer Strickmaschine zu erkennen ist. Es treten keine Streifen und punktförmigen Stellen auf, die von schwächeren oder stärkeren Anfärbungen des Garnes herrühren könnten. Die Fäden zeigen auf der Faseroberfläche keine Ablagerungen von Oligomeren. Eine Nachreinigung bei 80°C mit verdünnter Natronlauge und Natriumdithionit ist nicht erforderlich.

### Beispiel 2

### Färben nach dem Ausziehverfahren in Gegenwart eines Gleitmittels

50 kg eines Gewebes aus Polyesterstapelfasergarn in Kette und Schuß, das durch einen industriellen Waschprozeß von anhaftender Schlichte und Spinnpräparation gereinigt wurde, getrocknet und während 45 sek. bei 180°C mit Heißluft auf einen Spinnrahmen fixiert wurde, wird in eine Färbemaschine für Gewebe eingeladen. Danach werden Anfang und Ende der Warenbahn aneinander genäht, so daß ein endloses Band ensteht. Die Färbemaschine enthält je 1 kg Färbegut 8 l Wasser. Mittels dieses 60°C warmen Färbebades wird das Gewebe unter Zuhilfenahme einer Venturidüse in der Färbemaschine bewegt. Diesem Bad werden beliebig nacheinander oder gleichzeitig 1 g/l eines Gleithilfsmittels wie in DE-OS-2542051 beschrieben (Handelsname: ®Emigen DPR), 5 g/l Soda kalz. und 0,3 cm³/l Natronlauge (ca. pH 9,5) sowie 1 % des Hilfsmittels der Formel 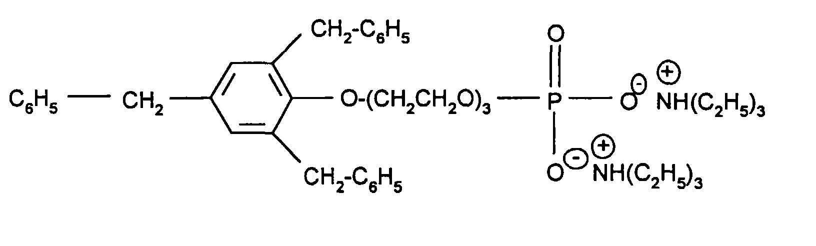 zugegeben.

Bei 60°C wird dieses Behandlungsbad 10 min. mit dem Gewebe zusammen bewegt. Die Bewegung des Gewebes durch das Bad wird während des ganzen Prozesses, solange die Färbemaschine gefüllt ist, beibehalten. Durch diesen Vorlauf entsteht eine gleichmäßige Verteilung des Hilfsmittels und der Chemikalien im Bad und im Färbegut.

Nach diesem Vorlauf wird 0,75 % des Farbstoffes (Color Index Disperse Blue 60) berechnet auf das Gewicht des Gewebes mit der Formel 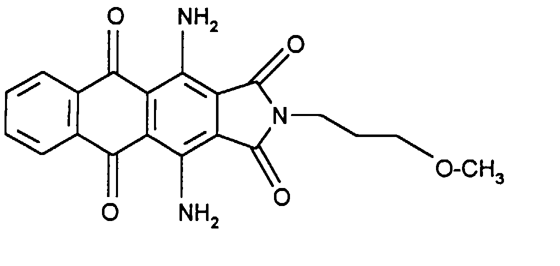 dem Behandlungsbad zugegeben. Zum gleichmäßigen Verteilen des Farbstoffes wird 10 min., wie oben beschrieben, das Gewebe mittels der Flotte bewegt. Danach wird das Behandlungsbad durch eine indirekte Heizung mit 1,0°C pro min. auf 130°C aufgeheizt. Während 30 min. wird bei 130°C gefärbt, gefolgt von einem Abkühlen mit 2°C/min. auf 60°C. Das Behandlungsbad wird bei 60°C abgelassen. Die Färbung auf dem Färbegut ist gleichmäßig und reibecht. Es treten keine schwächeren oder stärkeren Anfärbungen des Gewebes in Kett- und Schußrichtung auf.

### Beispiel 3:

### Färben des Polyesterfaseranteils von Mischgeweben nach dem Ausziehverfahren

Verwendet wurde ein Gewebe mit 40 kg Gewicht aus einem Garn in Kette und Schuß, das aus einer Mischung von 50 Gewichtsprozent Polyesterstapelfaser und 50 Gewichtsprozent Baumwolle besteht. Das Gewebe wurde einem industriellen Wasch- und Bleichprozeß unterzogen zum Entfernen anhaftender Schlichte, Spinnpräparationen und der natürlichen Begleitsubstanzen der Baumwolle. Danach wurde getrocknet und während 60 sek. bei 170°C mit Heißluft auf einem Spannrahmen fixiert. Zum Färben wurde das Mischgewebe in eine Färbemaschine eingeladen und der Anfang an das Ende der Warenbahn aneinander genäht, so daß ein endloses Band entsteht. Die Färbemaschine enthielt je 1 kg Färbegut 81 Wasser. Mittels dieses 60°C warmen Färbebades wurde das Gewebe unter Zuhilfenahme einer Venturidüse in der Färbemaschine bewegt. Diesem Bad wurden beliebig nacheinander oder gleichzeitig 1 Gewichtsprozent, berechnet auf das Gewicht des Gewebes, eines Gleitmittels der Hoechst AG (®Humectol C) sowie 0,02 g/l Trinatriumphosphat-12-Hydrat und 2 g/l Dinatriumhydrogenphosphat-12-Hydrat (ca. pH 9,5) sowie 1 % des Hilfsmittels der in Beispiel 1 angegebenen Formel zugegeben.

Bei 60°C wurde dieses Behandlungsbad 10 min. mit dem Gewebe zusammen in der Färbemaschine bewegt. Die Bewegung des Gewebes durch das Bad wurde während des ganzen Prozesses, solange die Färbemaschine gefüllt ist, beibehalten. Durch diesen Vorlauf entsteht eine gleichmäßige Verteilung des Hilfsmittels und der Chemikalien im Bad und im Färbegut.

Nach diesem Vorlauf wurde 0,5 % des Farbstoffes, berechnet auf das Gewicht des Gewebes, mit der Formel aus Beispiel 1 dem Behandlungsbad zugegeben. Zum gleichmäßigen Verteilen des Farbstoffes wurde 10 min., wie oben beschrieben, das Gewebe mittels der Flotte bewegt. Danach wurde das Behandlungsbad durch eine indirekte Heizung mit 1°C pro min. auf 125°C aufgeheizt, während 60 min. wurde bei 125°C gefärbt, gefolgt von einem Abkühlen mit 2°C pro min. auf 60°C. Das Behandlungsbad wurde bei 60°C abgelassen. Die Färbung auf dem Gewebe ist auf dem Polyesterfaseranteil gleichmäßig und reibecht, die Baumwollfaser ist vom Farbstoff reserviert.

### Beispiel 4

31 Gewichtsteile des Farbstoffes der Formel 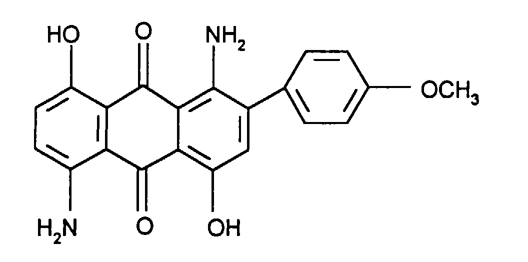 (Color Index Disperse Blue 73) in Form eines wäßrigen Preßkuchens werden mit 18 Gewichtsteilen dinaphthylmethansulfosaurem Natrium (Tamol NNO), 0,3 Gewichtsteilen eines Biocids, 6 Gewichtsteilen des erfindungsgemäßen Hilfsmittels aus Beispiel 1 und 50,7 Gewichtsteilen Wasser (abzüglich der schwankenden Restmengen Wasser des wäßrigen Preßkuchens) in einer Perlmühle so lange gemahlen, bis die Teilchengröße unterhalb von 1 µm liegt. Die Zubereitung ist dünnflüssig und lagerstabil. Bei der Wickelkörperfärbung wird eine gleichmäßige Färbung mit guter Reibechtheit und ohne Farbstoffabfiltrationen erhalten.

### Beispiel 5:

### Färben nach dem Ausziehverfahren

Fäden aus Polyester-Endlos-Material werden auf Färbehülsen gewickelt und in einem Färbeapparat für Kreuzspulen in einem Färbebad behandelt. Der Färbeapparat enthält auf 1 kg Färbegut 10 l Wasser. Dieses Bad enthält 3 g/l Natriumtetraborat-10-Hydrat und 1 g/l von dem Egalisier- und Dispergiermittel der Formel

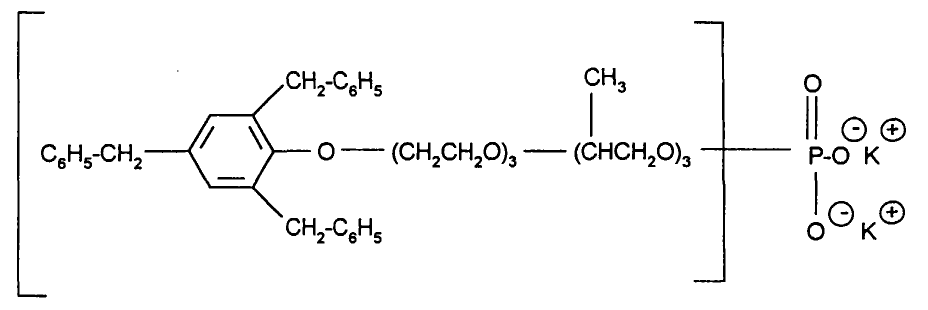

Bei 60°C wird dieses Behandlungsbad abwechselnd von innen nach außen und von außen nach innen durch die Kreuzspulen gepumpt, insgesamt 10 min. lang. Diese wechselnde Richtung der Färbeflotte wird während des ganzen Prozesses, solange der Apparat gefüllt ist, beibehalten. Durch diesen Vorlauf entsteht eine gleichmäßige Verteilung des Hilfsmittels und der Chemikalien im Bad und im Färbegut.

Nach diesem Vorlauf wird 2 % des Farbstoffes (Color Index Disperse Yellow 160) berechnet auf das Gewicht der Fäden mit der Formel 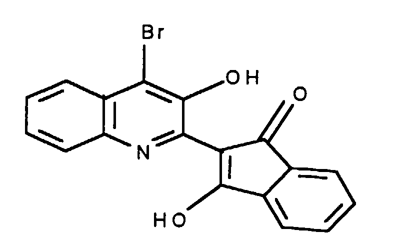 dem Behandlungsbad zugegeben. Zum gleichmäßigen Verteilen des Farbstoffes wird 10 min. mit wechselnder Flottenrichtung, wie oben beschrieben, behandelt. Danach wird das Behandlungsbad durch eine indirekte Heizung mit 0,5°C pro min. auf 130°C aufgeheizt. Während 30 min. wird bei 130°C gefärbt, gefolgt von einem Abkühlen mit 2°C pro min. auf 80°C. Das Behandlungsbad wird bei 80°C abgelassen. Die Färbung auf dem Färbegut ist gleichmäßig, sowie reibecht. Auf den Metallteilen des Färbeapparates, die mit dem Behandlungsbad in Berührung kommen, und den Hülsen treten keine Farbstoffabscheidungen auf. Ohne die dispergierende Wirkung des Hilfsmittels entsteht eine reibunechte Färbung und Ablagerungen des Farbstoffes auf den Metallteilen. Weiterhin ist die Färbung auf dem Färbegut gleichmäßig, wie durch Verstricken des Garnes auf einer Strickmaschine zu erkennen ist. Es treten keine Streifen und punktförmigen Stellen auf, die von schwächeren oder stärkeren Anfärbungen des Garnes herrühren könnten. Die Fäden zeigen auf der Faseroberfläche keine Ablagerungen von Oligomeren. Eine Nachreinigung bei 80°C mit verdünnter Natronlauge und Natriumdithionit ist nicht erforderlich.

## Patentansprüche

1. Verwendung von Aryloxypolyglykoläthern der Formel 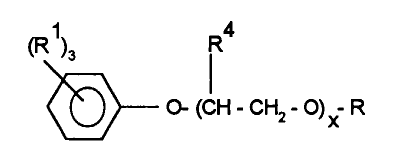 worin R Wasserstoff oder eine Gruppe der Formeln 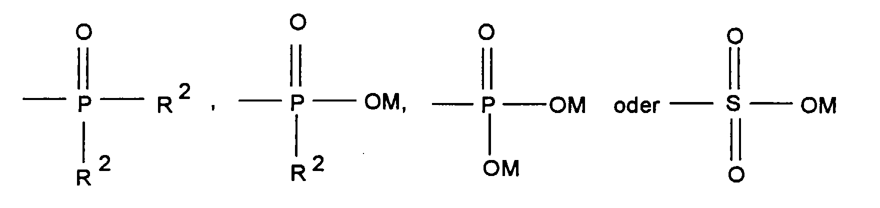 wobei Sulfosäureester nur im pH-Bereich von 7.1 bis 12 verwendet werden,
R¹ unabhängig voneinander Wasserstoff, C₁-C₂₄-Alkyl, C₅-C₁₅-Cycloalkyl, C₆-C₂₄-Aryl, C₇-C₂₄-Alkaryl oder (CH₂)_{z}Aryl
R² unabhängig voneinander -OH, -O-C₁-C₂₄-Alkyl, -O-C₅-C₁₅-Cycloalkyl, -O-C₆-C₁₈-Aryl oder
eine Gruppe der Formel 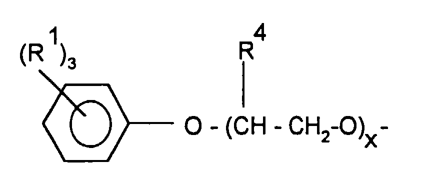
M ein Alkalimetall-, Erdalkalimetall- oder Ammoniumion der Formel N(R³)₄,
R³ unabhängig voneinander Wasserstoff, C₁-C₄-Alkyl, C₅-C₁₅-Cycloalkyl, C₆-C₁₈-Aryl oder eine Gruppe der Formel -(CH₂)_{z}OH,
R⁴ Wasserstoff oder Methyl,
x eine Zahl von 1 bis 100 und
z eine Zahl von 1 bis 10 bedeutet,
als Egalisier- und Dispergiermittel.

2. Verwendung von Aryloxypolyglykoläthern nach Anspruch 1, dadurch gekennzeichnet, daß
R¹ unabhängig voneinander C₁-C₁₂-Alkyl, C₅-C₁₀-Cycloalkyl, C₆-C₁₂-Aryl, C₇-C₁₃-Alkaryl,
R² unabhängig voneinander -O-C₁-C₁₂-Alkyl, -O-C₅-C₁₀-Cycloalkyl, -O-C₆-C₁₂-Aryl,
R³ unabhängig voneinander Wasserstoff, C₁-C₂-Alkyl, C₅-C₁₀-Cycloalkyl, C₆-C₁₂-Aryl,
x eine Zahl von 1 bis 50 und
z eine Zahl von 1 bis 8 bedeutet,

3. Verwendung von Aryloxypolyglykoläthern nach einem der Ansprüche 1 oder 2, dadurch gekennzeichnet, daß
R¹ unabhängig voneinander C₁-C₆-Alkyl, Phenyl, Naphthyl, Benzyl, Diphenyl, Styryl 1-Phenylethyl oder C₁-bis C₃- substituiertes Phenyl,
R² unabhängig voneinander O-C₁-C₆-Alkyl oder -O-Phenyl,und
M ein Kaliumion, Mono-, Di- oder Triethylammoniumion oder ein Triethanolammoniumion
x eine Zahl von 3 bis 10 und
z eine Zahl von 1 bis 5 bedeutet.

4. Verwendung von Aryloxypolyglykoläthern nach einem oder mehreren der Ansprüche 1 bis 3, dadurch gekennzeichnet, daß man Mischungen der Aryloxypolyglykoläther verwendet.

5. Färbebäder, Klotzbäder und Pasten für Textildruck und Papierdruck, enthaltend Aryloxypolyglykoläther nach einem oder mehreren der Ansprüche 1 bis 3.
